# EUROPÄISCHE PATENTSCHRIFT

(11) **EP 1 266 153 B1**
(45) Veröffentlichungstag und Bekanntmachung des Hinweises auf die Patenterteilung: **31.03.2004**
(21) Anmeldenummer: 01907402.0
(22) Anmeldetag: 03.01.2001
(51) Int. Cl.: F16H 57/02, F16H 1/20, H02K 7/116

(54) **GETRIEBEBAUKASTEN**
MODULAR TRANSMISSION SYSTEM
SYSTEME MODULAIRE D'ENGRENAGE

(30) Priorität: 20.03.2000 DE 10013785
(43) Veröffentlichungstag der Anmeldung: 18.12.2002
(73) Patentinhaber: Sew-Eurodrive GmbH & Co. KG, 76646 Bruchsal (DE)
(72) Erfinder: LEIBOLD, Hubert, 76694 Forst (DE)
(74) Vertreter: Bohnenberger, Johannes, Dr.
(86) Internationale Anmeldenummer: PCT/EP2001/000023
(87) Internationale Veröffentlichungsnummer: WO 2001/071220

(56) Entgegenhaltungen:
- EP-A- 0 557 961
- EP-A- 0 632 213
- WO-A-94/10482
- DE-A- 4 309 559
- DE-C- 19 733 546
- US-A- 3 645 148
- PATENT ABSTRACTS OF JAPAN vol. 1995, no. 01, 28. Februar 1995 (1995-02-28) -& JP 06 280946 A (TSUBAKIMOTO CHAIN CO), 7. Oktober 1994 (1994-10-07)
- BETRIEBSANLEITUNG 10503005/DE: "Getriebe Typenreihen R..7, F..7, K..7, S..7, Spiroplan W" SEW EURODRIVE, [Online] Mai 2001 (2001-05), Seiten 7-11, XP002168671 Gefunden im Internet: <URL:http://www.sew-eurodrive.de/pdf/10503 005.pdf> [gefunden am 2001-06-01]

## Beschreibung

Die Erfindung betrifft einen Getriebebaukasten nach dem Oberbegriff des Anspruchs 1.

Eine Getriebebaukasten nach dem Oberbegriff des Anspruchs 1 ist aus der EP 0 557 961 bekannt.

Ein Getriebebaukasten ist auch aus der DE 197 33 546 C1 bekannt. In dieser Druckschrift wird vorgeschlagen, mindestens ein Getriebemodul als Winkelgetriebe auszubilden, das mit mehreren Antriebsmodulen kombinierbar ist. Das Winkelgetriebe soll ein Kronradgetriebe sein, dessen Kronrad an den Eingriff des jeweiligen Antriebsritzels eines Antriebsmotors angepaßt ist. Will man jedoch sehr große Übersetzungsbereiche erfassen, so müssen bei dem bekannten Getriebebaukasten mehrere Getriebegehäuse vorgesehen werden, da Kronradgetriebe üblicherweise Übersetzungsvariationen lediglich im Bereich von etwa 1-6 zulassen. Auch die in der Druckschrift vorgeschlagenen weiteren Getriebestufen (mit Stirnrädern) erlauben in einem einzigen Gehäuse nur eine begrenzte Variation.

Ein weiterer Getriebebaukasten ist aus der EP 0 557 961 B1 bekannt. Als Eingangsstufe wird ein achsversetztes Winkelgetriebe und zwar ein Kegelrad vorgeschlagen, als nachgeschaltete weitere Getriebestufen sind Stirnräder gezeigt. Die Problematik bei diesem Getriebebaukasten entspricht dem oben Gesagten. Insbesondere ist auch hier kein sehr großer Bereich von Übersetzungszahlen möglich.

Der Erfindung liegt die Aufgabe zugrunde, einen Getriebebaukasten aufzuzeigen, der in einfacher Weise einen großen Bereich von Übersetzungszahlen erlaubt.

Diese Aufgabe wird durch einen Getriebebaukasten gemäß Patentanspruch 1 gelöst.

Ein wesentlicher Punkt der Erfindung liegt darin, daß in ein und demselben Gehäuse entweder eine Spiroplanstufe oder eine Kronradstufe eingebaut wird und zwar bei Verwendung des gleichen Achsversatzes bzw. der gleichen Bohrung. Der besondere Vorteil ist hierbei der große Bereich von Übersetzungszahlen, der sich ergibt, da eine Spiroplanstufe und eine Kronradstufe sehr unterschiedliche Übersetzungszahlen ermöglichen. Die Übersetzungszahlen für eine Kronradstufe liegen bei etwa 1-6, während die Übersetzungszahlen bei einer Spiroplanstufe bei 6-200 liegen. Insgesamt kann also mit dem Getriebebaukasten innerhalb eines einzigen Gehäuses ein Übersetzungsbereich von 1-200 bei nur einer Getriebestufe überstrichen werden.

Zur Spiroplanverzahnung sei angemerkt, daß derartige, hier gemeinte Verzahnungen zur Getriebeart der Winkelgetriebe gehören. Sie werden zur Leistungsübertragung bei sich schneidenden oder kreuzenden Wellen eingesetzt. In kinematischer Hinsicht handelt es sich hierbei um eine der Schneckenverzahnung ähnliche Schraubverzahnung, jedoch kämmt im Gegensatz zur Schneckenverzahnung hier eine zylindrische Schnecke mit einem Planrad als Gegenrad und nicht mit einem globoidischen Schneckenrad. Bei dem hier vorgesehenen Achsversatz ist die Zahnflankenlängsform des Rades bogenförmig.

Ein Spiroplangetriebe ist beispielsweise in der DE 43 09 559 A1 derselben Anmelderin beschrieben.

Im Unterschied dazu handelt es sich bei der Kronradverzahnung (gemäß Niemann/Winter, Band III, Kapitel 24.1.3) kinematisch gesehen um ein Kegelradpaar, bei welchem sich die Profilverschiebungen entlang der Zahnbreite ändern, und zwar so, daß ein zylindrisches Ritzel und ein Planrad als Gegenrad entstehen. Bei geradverzahntem Ritzel und Achsversatz ist die Zahnflankenlängsform des Rades eine Gerade, bei schrägverzahntem Ritzel ist sie bogenförmig.

Insbesondere wird also ein Getriebebaukasten zur Lösung der gestellten Aufgabe vorgeschlagen, der in mindestens einer Baustufe mit einem Gehäuse mehrere Getriebe mit verschiedenen Übersetzungen umfaßt, die jeweils eine erste Getriebestufe umfassend ein Winkelgetriebe mit Achsversatz umfassen, das ein eintreibendes Ritzel aufweist, welches mit einem stirnverzahnten Planrad kämmt, wobei der Achsversatz für alle Getriebe einer Baustufe gleich ist und wobei mindestens ein erstes Ritzel mit einem ersten stirnverzahnten Planrad in einer Kronradverzahnung und ein zweites Ritzel mit einem zweiten Planrad in einer Spiroplanverzahnung vorgesehen sind.

Vorzugsweise ist im Gehäuse eine mit der eintreibenden Getriebestufe in Drehverbindung befindliche zweite Getriebestufe bestehend aus mindestens zwei Stirnrädern vorgesehen. Dadurch ist ein erweiterter Bereich von Übersetzungszahlen möglich.

Bei einer ersten bevorzugten Ausführungsform ist das Planrad der ersten Getriebestufe über eine gemeinsame Lagerwelle mit einem Ritzel der zweiten Getriebestufe verbunden, so daß das Winkelgetriebe eine eintreibende Getriebestufe bildet. Besonders vorteilhaft ist hier die Tatsache, daß ein geräuschärmerer Lauf auf der schnellaufenden Getriebestufe sichergestellt wird, als dies mit Stirn- oder Kegelrädern machbar wäre. Nachdem eine Winkelstufe immer teurer ist als eine gleich große Stirnradstufe ergibt sich eine Kosteneinsparung, da die Stelle, an welcher das geringere Moment wirkt, kleiner ausgebildet sein kann. Eine Tragbildeinstellung wie bei Schnecken- oder Kegelradgetrieben ist hier nicht notwendig.

Bei einer anderen Ausführungsform der Erfindung ist ein Abtriebszahnrad der zweiten Getriebestufe über eine gemeinsame Lagerwelle mit dem eintreibenden Ritzel der ersten Getriebestufe verbunden, so daß das Winkelgetriebe eine abtreibende Getriebestufe bildet. Der Vorteil dieser Anordnung liegt darin, daß die aus Standardbaukästen (insbesondere der Anmelderin) bereits vorhandenen Stirnräder verwendbar sind, so daß sich deren Übersetzungsvarianz kostengünstig zur Verfügung stellen läßt. Damit aber sind nur zwei oder drei verschiedene Übersetzungen der abtreibenden Winkelgetriebestufe (insbesondere Spiroplanstufe) notwendig, um eine ausreichende Übersetzungspalette anbieten zu können. Der Getriebeaufbau ist auch hier wieder einfach und ohne Tragbildeinstellung, wie bei Schnecken- oder Kegelradgetrieben. Es ergibt sich ein besonders stoßdämpfender und geräuscharmer Lauf. Ein weiterer wichtiger Punkt liegt hierbei auch darin, daß durch den Achsversatz des Ritzels Platz geschaffen wird für die Stirnrad-Getriebestufen, so daß das Getriebe besonders flachbauend ist.

Insbesondere bei der Ausführungsform, bei welcher das Winkelgetriebe die abtreibende Getriebestufe bildet, ist es von Vorteil, wenn das Gehäuse Einrichtungen zum Anflanschen an einen Motor aufweist, wobei das eintreibende Stirnrad der zweiten Getriebestufe auf einer Ausgangswelle des Motors befestigt ist. Dieser Aufbau ist besonders kostensparend und kompakt.

Insgesamt wird der Achsversatz vorzugsweise zwischen 2/10 und 4/10 des Durchmessers des Planrads vorgenommen.

Nachfolgend werden bevorzugte Ausführungsformen der Erfindung anhand von Abbildungen näher erläutert. Hierbei zeigen:
- Fig. 1: eine erste bevorzugte Ausführungsform der Erfindung im Längsschnitt, bei welcher die erste Stufe des Getriebes ein Paar von Stirnrädern umfaßt,
- Fig. 2: eine schematisierte Schnittansicht des Getriebes nach Fig. 1 entlang der Linie II-II aus Fig. 1,
- Fig. 3: eine zweite Ausführungsform der Erfindung in einer Darstellung ähnlich der nach Fig. 1, wobei die eintreibende Getriebestufe ein Winkelgetriebe ist, und
- Fig. 4: einen Schnitt durch das Getriebe nach Fig. 3 entlang der Linie IV-IV.

In der nachfolgenden Beschreibung werden für gleiche und gleich wirkende Teile dieselben Bezugsziffern verwendet.

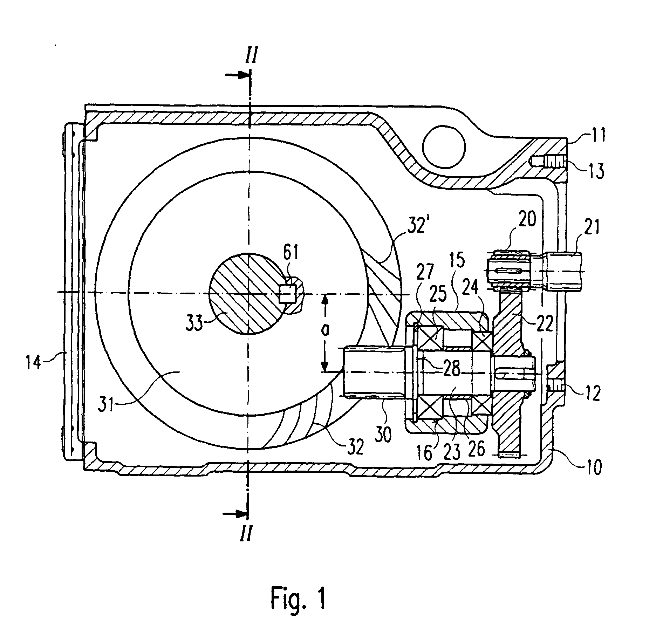

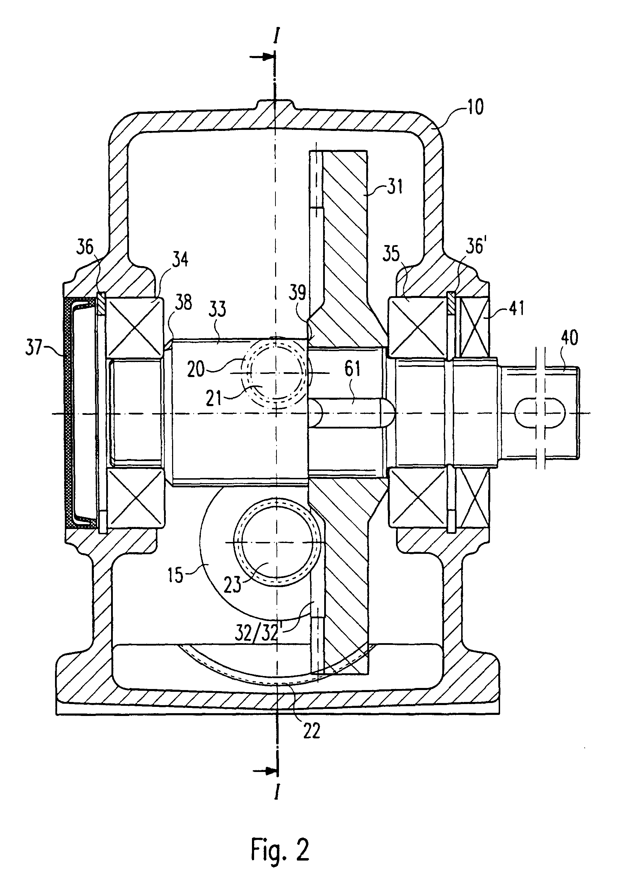

Wie aus den Figuren 1 und 2 hervorgeht, ist ein Gehäuse 10 vorgesehen, das an einer Seite einen Flansch 11 zum Anflanschen (eines hier nicht gezeigten) Elektromotors aufweist, zu dessen Befestigung Bohrungen 12, 13 im Gehäuse 10 dienen. Zur Zugänglichmachung des Gehäuseinneren ist ein Deckel 14 vorgesehen, der über Schraubbolzen (nicht gezeigt) und Dichteinrichtungen fest auf dem Gehäuse 10 befestigt ist.

In die beim Flansch 11 offene Seite des Gehäuses 10 ragt bei anmontiertem Motor ein Stirnradritzel 20, das auf einer Motorwelle 21 befestigt ist. Das Stirnradritzel 20 kämmt mit einem Stirnrad 22, welches auf einer ersten Welle 23 aufgekeilt ist, die über ein erstes Lager 24 und ein zweites Lager 25 in einem Lagerabschnitt 15 des Gehäuses 10 gelagert ist. Das erste Lager 24 liegt mit einer Außenseite am Stirnrad 22 und mit einer Innenseite an einem Distanzstück 26 an, das bis zu einer ersten Stirnseite des zweiten Lagers 25 führt. Das zweite Lager 25 ist zwischen einer Schulter 16 des Lagerabschnitts 15 und einem Sprengring 27 befestigt, während die erste Welle 23 mit einer Schulter 28 an der dem Stirnrad 22 gegenüberliegenden Fläche des zweiten Lagers 25 anliegt. Auf diese Weise ist die Welle 23 gegen Axialverschiebung im Lagerabschnitt 15 gesichert.

An der dem Stirnrad 22 gegenüberliegenden Seite ist die erste Welle 23 mit einem Winkelradritzel 30 versehen, dessen Verzahnung mit der Verzahnung eines Planrades 31 kämmt. Die Verzahnung kann als Spiroplanverzahnung 32 oder als Kronradverzahnung 32' ausgebildet sein, je nachdem welche Übersetzung gewünscht ist. Die Zahnflankenformen, die in Figur 1 angedeutet sind, sollen diesen Umstand verdeutlichen, wobei die bei der Bezugsziffer 32' gezeichnete Zahnverlaufsform für eine Kronradverzahnung bei geradverzahntem Ritzel angedeutet ist, während bei einem schräg verzahntem Ritzel für eine Kronradverzahnung sich ein bogenförmiger Verlauf ergäbe. In beiden Fällen, also sowohl dann wenn das Winkelradritzel 30 und das Planrad 31 mit einer Spiroplanverzahnung 32 versehen sind, als auch dann, wenn die beiden Verzahnungen einer Kronradverzahnung 32' entsprechen, ist ein Achsversatz a zwischen der Achse der Welle 23 und der Achse einer zweiten Welle 33 des Planrades 31 vorgesehen. Dies bedeutet, daß bei ansonsten identischen Bauteilen sich nur die Verzahnungsgeometrien des Planrades 31 bzw. des Ritzels 30 voneinander unterscheiden, wobei jedoch sehr unterschiedliche Übersetzungszahlen für diese beiden Zahnflankenformen (in an sich bekannter Weise) erreichbar sind.

Die zweite Welle 33 des Planrades 31 ist über ein drittes Lager 34 und ein viertes Lager 35 im Gehäuse 10 gelagert. Das dritte Lager 34 liegt mit einer Außenfläche an einem Sprengring 36 an, der im Gehäuse 10 sitzt. Bei der hier gezeigten Ausführungsform ist ein Deckel 37 vorgesehen, der das dritte Lager 34 abdeckt. Das dritte Lager 34 liegt weiterhin an einer ersten Schulter 38 der Welle 33 an, so daß eine Fixierung der Welle 33 in axialer Richtung (in Fig. 2 nach links) sichergestellt ist.

Das Planrad 31 liegt an einer zweiten Schulter 39 der Welle 33 an und ist mittels eines Keils 61 auf der Welle 33 drehfest befestigt. Auf der der zweiten Schulter 39 gegenüberliegenden Seite liegt das Planrad 31 an der einen Seite des vierten Lagers 35 an, das auf seiner anderen Seite an einem Sprengring 36' anliegt, der im Gehäuse 10 befestigt ist. Dadurch werden die Welle 33 und das Planrad 31 mittels der Lager 34 und 35 im Gehäuse 10 in axialer Richtung gesichert gehalten.

Die Welle 33 weist einen Abtriebszapfen 40 auf, der durch einen Dichtring 41 am Gehäuse 10 hindurchgeführt ist. Auf den Abtriebszapfen 40 kann ein anzutreibendes Maschinenelement aufgekeilt werden. Wie aus Fig. 2 leicht ersichtlich, kann die Welle 33 auch mit zwei Abtriebszapfen versehen werden, wenn man den Deckel 37 fortläßt und stattdessen eine zweite Dichtung an diesem Ende vorsieht. Eine zu Fig. 2 umgekehrte Anordnung, bei welcher der Antriebszapfen 40 nach links ragt und der Deckel 37 auf der rechten Seite sitzt, ist selbstverständlich ebenso möglich, da das Gehäuse 10 in dieser Hinsicht symmetrisch aufgebaut ist.

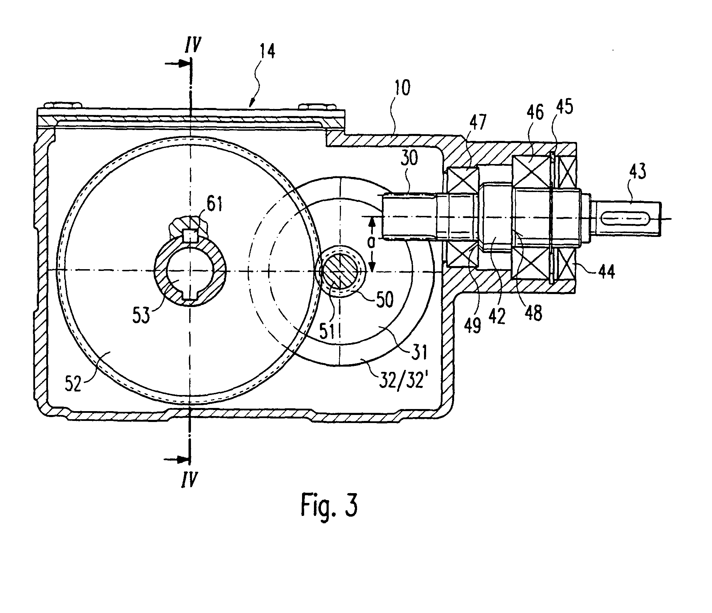

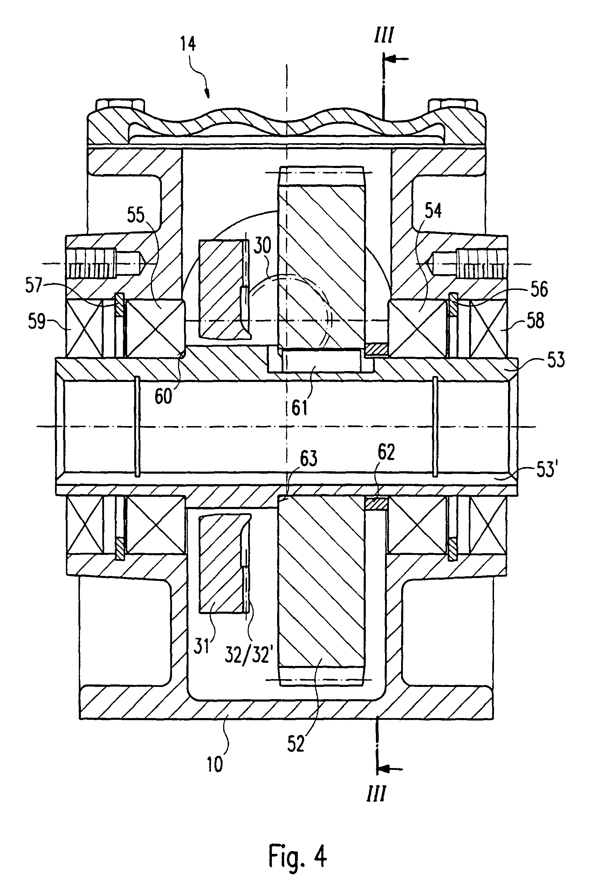

Die in den Figuren 3 und 4 gezeigte Ausführungsform der Erfindung unterscheidet sich vom Prinzip her von der nach den Figuren 1 und 2 durch die Reihenfolge vom Winkelgetriebe und Stirnradgetriebe. Demzufolge ist bei der in den Figuren 3 und 4 gezeigten Ausführungsform eine eintreibende Welle 42 vorgesehen, welche einen aus dem Gehäuse 10 herausstehenden Antriebszapfen 43 aufweist, auf den ein antreibendes Element aufkeilbar ist. Die eintreibende Welle 42 ist über einen Dichtring 44 gegenüber dem Gehäuse 10 abgedichtet und über ein äußeres Lager 46 und ein inneres Lager 47 gelagert. Das äußere Lager 46 sitzt zwischen einer Schulter im Gehäuse 10 und einem Sprengring 45 und liegt an einer ersten Schulter 48 auf der eintreibenden Welle 42 an. Das innere Lager 47 liegt an einer zweiten Schulter 49 der eintreibenden Welle 42 und auf der anderen Seite an einer Schulter des Gehäuses 10 an. Auf diese Weise ist die eintreibende Welle 42 in axialer Richtung unverschiebbar im Gehäuse 10 befestigt.

An ihrem, dem Antriebszapfen 43 gegenüberliegenden Ende ist die eintreibende Welle 42 mit dem Winkelradritzel 30 versehen, das - je nach Ausführungsform - wie oben erläutert, eine Spiroplan oder eine Kronradverzahnung aufweisen kann. Das Winkelradritzel 30 kämmt mit der entsprechenden Verzahnung 32 bzw. 32' des Planrades 31, welches auf einer im Gehäuse 10 drehbar gelagerten Welle 51 sitzt, auf welcher ein erstes Stirnrad 50 zusammen mit dem Planrad 31 befestigt ist, so daß das Stirnrad 50 und das Planrad 31 drehfest miteinander verbunden sind.

Das erste Stirnrad 50 kämmt mit einem zweiten Stirnrad 52, welches auf einer Abtriebswelle 53 mittels eines Keils 61 drehfest befestigt ist. Die Abtriebswelle 53 ist als Hohlwelle ausgebildet und weist eine durchgehende Längsnut 53' zum Festkeilen eines anzutreibenden Elementes auf. Die Abtriebswelle 53 ist über ein erstes Lager 54 und ein zweites Lager 55 im Gehäuse gelagert. Das erste Lager 54 liegt an seiner Außenseite an einem Sprengring 56 an, der im Gehäuse 10 sitzt. Auf seiner anderen Seite liegt das erste Lager an einem Distanzstück 62 an, das wiederum am zweiten Stirnrad 52 anliegt. Das zweite Stirnrad 52 liegt an einer Schulter 63 der Abtriebswelle 53 an.

Das zweite Lager 55 liegt auf seiner Außenseite an einem zweiten Sprengring 57 an, welcher im Gehäuse 10 sitzt. Auf seiner anderen Seite liegt das zweite Lager 55 an einer Schulter 60 der Abtriebswelle 53 an, so daß die Abtriebswelle 53 sowie das darauf befindliche zweite Stirnrad 52 axial unverschiebbar gesichert sind. Zur Abdichtung der Abtriebswelle 53 sind auf beiden Seiten Dichtungen 58 bzw. 59 vorgesehen.

Die oben beschriebenen Ausführungsbeispiele der Erfindung zeigen jeweils auch Einzelelemente, die untereinander vertauschbar sind. Insbesondere ist es beispielsweise möglich, auch bei der in den Figuren 3 und 4 gezeigten zweiten Ausführungsform der Erfindung das Winkelradritzel 30 direkt auf der Welle eines eintreibenden Motors vorzusehen und das Gehäuse 10 mit einem Flansch 11 und Bohrungen 12, 13 zum direkten Anflanschen des Motors zu versehen, wie dies in den Figuren 1 und 2 gezeigt ist. Gleichfalls ist es möglich, bei der Ausführungsform nach den Figuren 1 und 2 anstelle des Flansches 11 und den Befestigungsbohrungen 12, 13 die in den Figuren 3 und 4 gezeigte eintreibende Welle 42 mit ihrer Lagerung im Gehäuse und dem frei verwendbaren Antriebszapfen 43 vorzusehen.

Auch die Ausbildung der in den Figuren 3 und 4 gezeigten Abtriebswelle 53 als Hohlwelle läßt sich bei der Ausführungsform nach den Figuren 1 und 2 anwenden bzw. die einseitig herausgeführte Anordnung der Abtriebswelle nach den Figuren 1 und 2 in der Ausführungsform nach den Figuren 3 und 4. Hieraus ergibt sich, daß ein Getriebebaukasten entsteht, der extrem variabel einsetzbar ist. Insbesondere die Stirnrad-Getriebestufen lassen sich aus Stirnrädern zusammensetzen, wie sie in den üblicherweise schon vorhandenen Stirnrad-Getriebebaukästen vorgesehen sind, so daß eine kostengünstig fertigbare breite Palette an Übersetzungszahlen zur Verfügung gestellt werden kann. Der wahlweise Einsatz des Winkelradgetriebes entweder mit einer Spiroplan- oder mit einer Kronradverzahnung erlaubt extrem große Bereiche der Übersetzungszahlen.

### Bezugszeichenliste

- 10: Gehäuse
- 11: Flansch
- 12: Bohrung
- 13: Bohrung
- 14: Deckel
- 15: Lagerabschnitt
- 16: Schulter
- 20: Stirnradritzel
- 21: Motorwelle
- 22: Stirnrad
- 23: erste Welle
- 24: erstes Lager
- 25: zweites Lager
- 26: Distanzstück
- 27: Sprengring
- 28: Schulter
- 30: Winkelradritzel
- 31: Planrad
- 32: Spiroplanverzahnung
- 32': Kronradverzahnung
- 33: zweite Welle
- 34: drittes Lager
- 35: viertes Lager
- 36: Sprengring
- 36': Sprengring
- 37: Deckel
- 38: erste Schulter
- 39: zweite Schulter
- 40: Abtriebszapfen
- 41: Dichtring
- 42: eintreibende Welle
- 43: Antriebszapfen
- 44: Dichtring
- 45: Sprengring
- 46: äußeres Lager
- 47: inneres Lager
- 48: erste Schulter
- 49: zweite Schulter
- 50: erstes Stirnrad
- 51: Welle
- 52: zweites Stirnrad
- 53: Abtriebswelle
- 53': Nut
- 54: erstes Lager
- 55: zweites Lager
- 56: erster Sprengring
- 57: zweiter Sprengring
- 58: erste Dichtung
- 59: zweite Dichtung
- 60: Schulter
- 61: Keil
- 62: Distanzstück
- 63: Schulter

## Patentansprüche

1. Getriebebaukasten, umfassend in mindestens einer Baustufe mit einem Gehäuse (10) mehrere Getriebe mit verschiedenen Übersetzungen, die jeweils eine erste Getriebestufe aufweisen, umfassend ein Winkelgetriebe mit Achsversatz (a), **dadurch gekennzeichnet, daß** der Achsversatz (a) für alle Getriebe einer Baustufe gleich ist, und daß mindestens ein erstes Ritzel (30) des Winkelgetriebes mit einem ersten stirnverzahnten Planrad (31) in einer Kronradverzahnung (32') bzw. ein zweites Ritzel (30) mit einem zweiten Planrad (31) in einer Spiroplanverzahnung (32) vorgesehen sind.

2. Getriebebaukasten nach Anspruch 1,
**dadurch gekennzeichnet, daß**
im Gehäuse (10) eine mit der ersten Getriebestufe in Drehverbindung befindliche zweite Getriebestufe bestehend aus mindestens zwei Stirnrädern (20, 22; 50, 52) vorgesehen ist.

3. Getriebebaukasten nach Anspruch 2,
**dadurch gekennzeichnet, daß**
das Planrad (31) der ersten Getriebestufe über eine gemeinsame Lagerwelle (51) mit einem Ritzel (50) der zweiten Getriebestufe verbunden ist, so daß das Winkelgetriebe (30, 31) eine eintreibende Getriebestufe bildet.

4. Getriebebaukasten nach Anspruch 2,
**dadurch gekennzeichnet, daß**
ein Abtriebszahnrad (22) der zweiten Getriebestufe über eine gemeinsame Lagerwelle (23) mit dem eintreibenden Ritzel (30) der ersten Getriebestufe verbunden ist, so daß das Winkelgetriebe (30, 31) eine abtreibende Getriebestufe bildet.

5. Getriebebaukasten nach einem der vorhergehenden Ansprüche,
**dadurch gekennzeichnet, daß**
daß das Gehäuse (10) Einrichtungen (11-13) zum Anflanschen an einen Motor aufweist und daß ein eintreibendes Zahnrad (20, 30) auf einer Ausgangswelle (21) des Motors befestigt ist.

6. Getriebebaukasten nach einem der vorhergehenden Ansprüche,
**dadurch gekennzeichnet, daß**
der Achsversatz (a) zwischen 2/10 und 4/10 des Durchmessers des Planrades (31) beträgt.

## Claims

1. A transmission construction kit, comprising in at least one stage with a housing (10) a plurality of gears with different transmission ratios, which each have a first gear stage, comprising a bevel gear with axial offset (a), **characterised in that** the axial offset (a) is equal for all gears of one stage, and **in that** at least one first pinion (30) of the bevel gear is provided with a first end-toothed crown-wheel (31) in a face gear toothing (32') and/or a second pinion (30) is provided with a second crown-wheel (31) in a spiral face toothing (32).

2. A transmission construction kit according to Claim 1, **characterised in that** in the housing (10) there is provided a second gear stage disposed in rotational connection with the first gear stage, which second gear stage comprises at least two spur gears (20,22; 50,52).

3. A transmission construction kit according to Claim 2, **characterised in that** the crown-wheel (31) of the first gear stage is connected via a common bearing shaft (51) to a pinion (50) of the second gear stage so that the bevel gear (30,31) forms a driving gear stage.

4. A transmission construction kit according to Claim 2, **characterised in that** a driven gearwheel (22) of the second gear stage is connected via a common bearing shaft (23) to the driving pinion (30) of the first gear stage so that the bevel gear (30,31) forms driven gear stage.

5. A transmission construction kit according to any one of preceding Claims, **characterised in that** the housing (10) has means (11-13) for flange-mounting to a motor, and **in that** a driving gearwheel (20,30) is mounted on an output shaft (21) of the motor.

6. A transmission construction kit according to any one of the preceding Claims, **characterised in that** the axial offset (a) is between 2/10 and 4/10 of the diameter of the crown-wheel (31).

## Revendications

1. Système modulaire d'engrenage comprenant dans au moins un étage modulaire avec un carter (10) plusieurs engrenages de rapports de transmission différents, dont chacun présente un premier étage d'engrenage, comportant un engrenage conique à décalage axial (a), **caractérisé en ce que** le décalage axial (a) est égal pour tous les engrenages d'un étage modulaire et **en ce que** sont prévus au moins un premier pignon (30) de l'engrenage conique avec une première roue plate (31) à denture droite dans une denture de couronne (32'), repectivement un second pignon (30) avec une seconde roue plate (31) dans une denture spiro-plane (32).

2. Système modulaire d'engrenage suivant la revendication 1, **caractérisé en ce qu'**un second étage d'engrenage, situé en liaison de rotation avec le premier étage d'engrenage et composé d'au moins deux roues droites (20, 22 ; 50, 52), est prévu dans le carter (10).

3. Système modulaire d'engrenage suivant la revendication 2, **caractérisé en ce que** la roue plate (31) du premier étage d'engrenage est reliée par l'intermédiaire d'un arbre de palier commun (51) à un pignon (50) du second étage d'engrenage, si bien que l'engrenage conique (30, 31) forme un étage d'engrenage menant.

4. Système modulaire d'engrenage suivant la revendication 2, **caractérisé en ce qu'**une roue dentée de sortie (22) du second étage d'engrenage est reliée par l'intermédiaire d'un arbre de palier commun (23) au pignon menant (30) du premier étage d'engrenage, de sorte que l'engrenage conique (30, 31) forme un étage d'engrenage de sortie.

5. Système modulaire d'engrenage suivant l'une des revendications précédentes, **caractérisé en ce que** le carter (10) présente des dispositifs (11 - 13) pour le bridage sur un moteur, et **en ce qu'**une roue dentée menante (20, 30) est fixée sur l'arbre de sortie (21) du moteur.

6. Système modulaire d'engrenage suivant l'une des revendications précédentes, **caractérisé en ce que** le décalage axial (a) est compris entre 2/10 et 4/10 du . diamètre de la roue plate (31).
